# EUROPEAN PATENT APPLICATION

(11) **EP 1 808 546 A1**
(43) Date of publication of application: **18.07.2007**
(21) Application number: 06447009.9
(22) Date of filing: 13.01.2006
(51) Int. Cl.: E04F 15/00, E04F 15/02, E04F 15/10

(54) **Deck or floor panel and system comprising such panels**

(71) Applicant: WYCO G.C.V., 8720 Oeselgem (BE)
(72) Inventor: Wybo, Carlos, 8720 Oeselgem (BE)
(74) Representative: pronovem

(57) **Abstract**

The present invention relates to a deck or floor panel (1) comprising
- an extruded profile made of a first hard PVC, said profile having a tongue (2) on at least a first side of the panel and a main groove (3) on at least a second side opposite to the first side, said tongue and main groove being so shaped as to form a tight joint when snapped together with a similar panel,
- a plurality of parallel air chambers (4) separated by internal edges (5),

whereby the tongue is provided at its lower surface with a protrusion (6) in a second PVC and whereby the air chambers are so shaped that the internal edges (5) have an X-legged shape.

## Description

### Field of the invention

The present invention relates to coverings comprising panels in the shape of tiles or planks.

### State of the art

Floor coverings as in the present invention are an alternative for the classic parquet floor of wood strips. In the prior art several systems are known comprising wood agglomerate and/or of thermohardening material. These systems of floor coverings are extensively described, e.g. in patent documents EP698162, EP855482, EP877130, EP813641 and EP843763. Their most interesting feature is their easy laying.

Systems composed of wood agglomerates have the disadvantage of being relatively sensitive to moisture, which may cause problems for storage and transport of the panels as well as during the laying (e.g. in dry and roofed-in working area). Also in usage problems can occur related to the tightness of the laying seams. Problems may also arise from the presence of moisture under the floor. Some systems with separate hard panels need a junction by dovetailing with tongues and grooves at the sides of the panels.

However, such systems do not provide the desired performance in terms of strength of the fixation system between the panels or of easy removability in case the panels are to be reused. Another often reported drawback relates to cracking noises produced when people walk on a floor made of such panels.

Some alternatives have therefore been presented. Patent document US2002/0142135-A1 discloses a thermoplastic laminate plank. The thermoplastic laminate plank has a core comprising at least one thermoplastic material and has a top surface and bottom surface wherein a print layer is affixed to the top surface of the core and an overlay layer is affixed to the top surface of the print layer. The plank may preferably be provided with a groove running along two opposite edges of the plank. Several such planks can be interconnected by inserting separate splines or tongues along the length of each groove. The core can be 100 % solid or can have one or more cavities located between the upper and lower surfaces of the core. The document also relates to a method for producing the thermoplastic laminate plank comprising a step of extruding at least one thermoplastic material into the shape of the core and affixing a laminate on the core. Document US 2005/0003160 relates to a thermoplastic laminate plank wherein the core further comprises wood filler.

International application WO02/08542-A1 discloses a deck or floor panel having an extruded profile, made of rigid PVC, that comprises an assembling device in the form of a tongue and a groove respectively provided on at least two opposite sides of the panel for laying and assembling by interlocking several successive panels, without fixing the panels to the ground.

Such panels with hard PVC profiles have several advantageous properties. They are highly water and moisture resistant due to the perfectly waterproof material. The water resistance is particularly interesting property for the following reasons. The floor panels can be laid without taking special care of the degree of moisture in the room. One does not have to wait until the screed has dried to start laying the panels. This clearly offers an advantage compared to wooden floors. When water or any other liquid is spilled, there is no danger of expansion of the panels, as would be the case with parquet floors or laminated wood panels.

However, it was found that the above described panels with hard PVC profile still don't offer an optimal degree of dimensional stability, i.e. an optimal ability to keep the original shape and size over the lifetime of the floor and with changes in climate and humidity.

### Aims of the invention

The present invention aims to provide deck or floor panels with improved dimensional stability. The invention further aims to provide a flooring system made of such panels.

### Summary of the invention

The present invention relates to a deck or floor panel comprising
- an extruded profile made of a first hard PVC, said profile having a tongue on at least a first side of the panel and a main groove on at least a second side opposite to the first side, said tongue and main groove being so shaped as to form a tight joint when snapped together with a similar panel,
- a plurality of parallel air chambers separated by internal edges,
whereby the tongue is provided at its lower surface with a protrusion in a second PVC and in that the air chambers are so shaped that the internal edges have an X-legged shape. In a most preferable embodiment the second PVC is the same material as the first hard PVC. Alternatively it may be another hard PVC or a soft PVC.

In a preferred embodiment the tongue is further provided at its lower surface with a co-extruded strip in flexible PVC.

Advantageously the deck or floor panel has an extruded profile provided with a bottom surface having further grooves.

In a preferred embodiment the profile has a total thickness between 6 and 15 mm (preferably between 7 and 11 mm) the tongue has a width between 5 and 10 mm, (preferably between 6 and 8 mm) and a thickness between 2 and 5 mm (preferably between 3 and 4 mm). The main groove has a depth and height adapted to the width and thickness of the tongue.

Advantageously the tongue (2) has on its lower surface an inclined plane with an angle between 5° and 15°, preferably between 8° and 12°, from the (horizontal) median plane of the panel.

The invention also relates to a plank comprising a deck or floor panel as previously described, whereby the plank is further provided with a laminate layer, a PVC film or layer or with a print layer. The invention further relates to a tile comprising a deck or floor panel as described, said tile further being provided with a PVC film or layer or with a print layer.

In a further aspect the invention discloses a flooring system comprising a plurality of deck or floor panels as described.

The invention further relates to a flooring system comprising a plurality of planks or tiles as above described.

### Short description of the drawings

Fig. 1 represents a panel according to the present invention.

Fig. 2 represents a detail of Fig.1.

Fig. 3 represents a panel being snapped together with another panel.

Fig. 4 represents the two interlocked panels of Fig.3.

### Detailed description of the invention

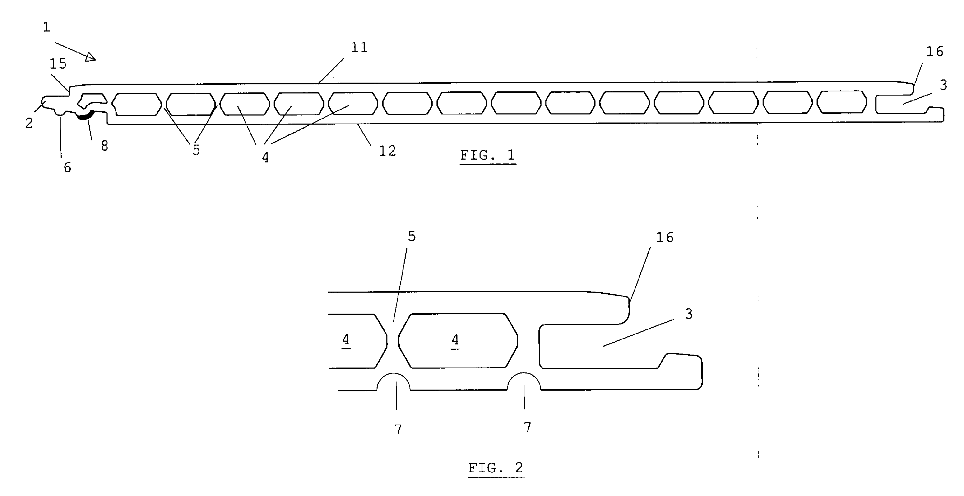

Fig. 1 illustrates a profiled deck or floor panel according to the present invention. It shows a section view perpendicularly on the length of the profile. The deck or floor panel (1) comprises (or consists of) an extruded profile made of hard PVC. The profile has a tongue (2) on at least a first side of the panel and a groove (3) on at least a second side opposite to that first side. The tongue and groove are so shaped as to form a tight joint when snapped together with a similar panel. Further several parallel air chambers (4) are provided separated by internal edges (5). The panels according to the invention

The deck or floor panels according to the invention are given an improved dimensional stability by providing two specific features. Firstly there is a protrusion (6) at the lower surface of the tongue (2) in PVC and secondly the air chambers (4) are formed such that the internal edges (5) have an X-legged shape. Fig.2, which is a detail of Fig.1, illustrates a possible shape of the air chambers. The air chambers in Fig.2 have an eight-angular-like configuration, which gives the internal edges their X-legged shape.

Providing internal edges with an X-legged shape is found to give additional dimensional stability to the panel, more specifically to the core of the panel. The most fragile area in a flooring system generally is the seam between two adjacent panels. Therefore an additional protrusion (6) in PVC at the lower surface of the tongue (2), i.e. in an area close to where two panels are joined, contributes considerably to improving the dimensional stability. The protrusion (6) is preferably in the same hard PVC as used for the profile, but may also be in another hard PVC or in soft PVC. The additional protrusion (6) at the lower surface has the further advantage that it also helps in improving the dimensional stability of the core of the panel. The stabilising effect of the protrusion further extends from the area of the seam towards the rest of the panels that are joined. The dimensional stability of a panel provided with the two additional features as in the present invention is increased by up to 50% as compared to panels lacking the specific features. These findings are confirmed by lab tests performed according to the IPC 2.2.4 method for measuring dimensional stability. Such a test method is well known for the person of skill in the art.

Apart from the improved stability several additional advantages can be obtained from providing the two additional features.

The additional protrusion further serves the purpose of improving and optimising the strength of the connection between panels. A bending strength increase of approximately 25 % on the connection between two panels is obtained. The connected panels (planks, tiles) are very stable and retain their form when walked upon in normal residential circumstances.

The lengthways parallel air chambers and X-legged internal edges also yield a natural reduction of the transmission and reflection of sound. This sound absorbing effect was verified by performing several tests as proposed by the European Producers of Laminate Flooring (EPLF). The tests deal with the transmission of sound (ISO 717/2), the reflection of sound within one room (EPLF standard 021029/3) and a pressure load test (ISO 140-8).

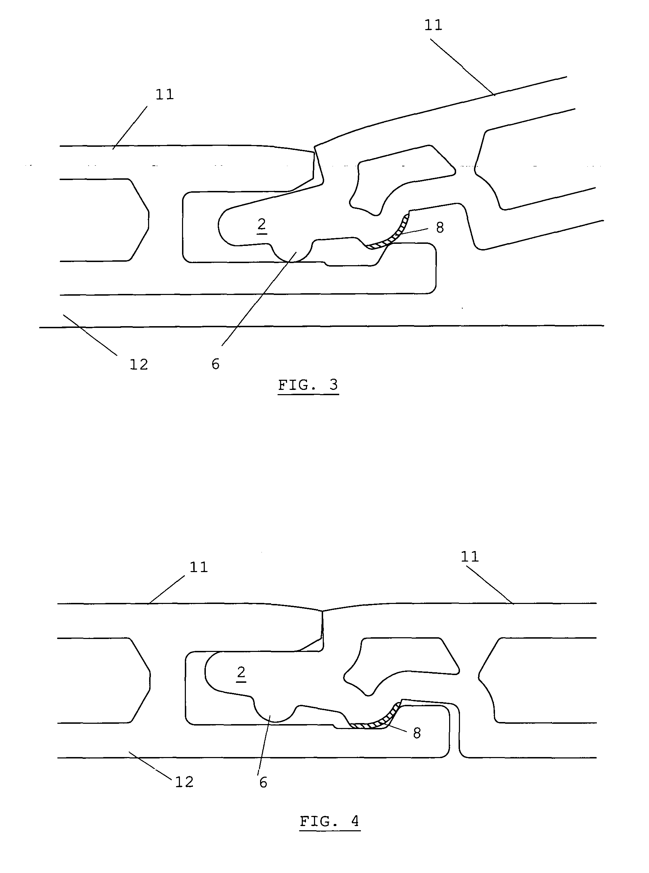

As already mentioned, in an advantageous embodiment the panel has a tongue that at its lower surface not only comprises a protrusion in hard PVC, but also a co-extruded or post-extruded strip in soft, flexible PVC. The soft PVC strip (8) is positioned farther away from the nearby extremity of the profile than the protrusion (6). Due to the soft PVC strip cracking noises are avoided when one walks on the floor, as direct contact between hard PVC is avoided. This is illustrated in Fig.3 and Fig.4. In Fig.3 it is shown how two panels are snapped together. Fig.4 shows the result. Note that in WO02/08542 such a strip in flexible PVC is used on the upper surface of the tongue, which does not give the same yield in terms of improved stability, as the panels in a flooring system undergo more pressure in a downward direction than in upward direction.

In an alternative embodiment the main groove (3) may be provided with a co-extruded or post-extruded strip in soft, flexible PVC. Optionally the main groove may also be provided with an additional protrusion.

PVC (polyvinylchloride) is a well-known and widely-used plastic. It is a hard plastic that can be made softer and more flexible by the addition of plasticisers (mostly being phthalates). So by soft PVC is meant a PVC to which chemicals for softening have been added. Soft PVC and hard PVC are well known terms for the person skilled in the art.

The presence of a flexible PVC strip increases the efficiency of the fixation of the panels. The strip in soft PVC offers a balance between the features of solidity, flexibility, adhesion to hard PVC in co-extrusion and friction coefficient with respect to hard PVC.

The extruded profile in PVC has a total thickness between 6 and 15 mm and comprises lengthways air chambers (4) with an average height of 3.5 mm, separated by internal lengthways edges (5) with a thickness of approximately 2.3 mm.

In one embodiment of the invention the profile does not contain a bottom surface. If a bottom surface (12) (i.e. an invisible surface after laying the panel) is provided to the panel (1), it advantageously comprises lengthways grooves (7), preferably under the internal edges (5). The grooves (7) may have a depth of 1.5 mm. It is known (e.g. from US2002/0142135) that providing such further grooves at the bottom side of the profile have sound deadening properties. So additionally providing such grooves even enforces the sound absorption capabilities provided by the air chambers (4). The further grooves (7) are also shown in Fig.2.

The side surfaces (15,16) at the extremities of the profile are essentially vertical such that two panels tightly fit into one another.

Close to the extremities of the profile the upper surface (11) of the profile is preferably slightly curved, so as to form a small hole (depth ± 0.8 mm) at the junction of two panels being interconnected.

The upper side (11) of the profile is mainly plain. This surface (the visible surface and, in the case of a floor, the 'walking' surface) preferably comprises (not shown in any figure) a scratch resistant laminate layer or a film/layer in PVC with a decorative design and a layer of material (laminated, varnish) offering protection against wear. Alternatively the upper side (11) is provided with a print layer with incorporated scratch resistant feature. Advantageously the panel is so given the look of a wooden plank or of a ceramic tile.

The panels are produced in various standard widths, for example 140 mm and 190 mm, offering additional aesthetic aspects. However, due to the production process comprising the extrusion of profiles, panels of any desired size can be delivered. The panels can thus be adapted to the dimensions of the room to be covered, thereby avoiding any cross-connection of the profiles. A further advantage is that the panels can be laid without fixing them to the ground under the panels.

Thanks to the co-extrusion process one immediately obtains profiles that can be clicked into one another. Principally there is no further need for any posttreatment in order to allow panels to be clicked into each other.

The panels as previously described and systems comprising a plurality of such panels can be used in both indoor and outdoor applications. The deck or floor panels as in the present invention can obviously also be used as wall panels.

## Claims

1. Deck or floor panel (1) comprising
- an extruded profile made of a first hard PVC, said profile having a tongue (2) on at least a first side of said panel and a main groove (3) on at least a second side opposite to said first side, said tongue and main groove being so shaped as to form a tight joint when snapped together with a similar panel,
- a plurality of parallel air chambers (4) separated by internal edges (5),
**characterised in that** said tongue is provided at its lower surface with a protrusion (6) in a second PVC and **in that** said air chambers are so shaped that said internal edges (5) have an X-legged shape.

2. Deck or floor panel as in claim 1, wherein said second PVC is the same material as said first hard PVC.

3. Deck or floor panel as in claim 1 or 2, wherein said tongue is further provided at its lower surface with a co-extruded strip in flexible PVC.

4. Deck or floor panel as in claim 1, 2 or 3, whereby said extruded profile is provided with a bottom surface (12) having further grooves (7).

5. Deck or floor panel as in any of claims 1 to 4, whereby
- said profile has a total thickness between 6 and 15 mm, preferably between 7 and 11 mm,
- said tongue (2) has a width between 5 and 10 mm, preferably between 6 and 8 mm, and a thickness between 2 and 5 mm, preferably between 3 and 4 mm, and
- said main groove has a depth and height adapted to the width and thickness of said tongue

6. Deck or floor panel as in any of the previous claims, wherein said tongue (2) on its lower surface has an inclined plane with an angle between 5° and 15°, preferably between 8° and 12°, from the median plane of said panel.

7. Plank comprising a deck or floor panel as in any of the previous claims, said plank further being provided with a laminate layer, a PVC film or layer or with a print layer.

8. Tile comprising a deck or floor panel as in any of claims 1 to 6, said tile further being provided with a PVC film or layer or with a print layer.

9. Flooring system comprising a plurality of deck or flooring panels as in any of claims 1 to 6.

10. Flooring system comprising a plurality of planks as in claim 7.

11. Flooring system comprising a plurality of tiles as in claim 8.
